# FASCICULE DE BREVET EUROPEEN

(11) **EP 3 283 277 B1**
(45) Date de publication et mention de la délivrance du brevet: **06.03.2019**
(21) Numéro de dépôt: 16717343.4
(22) Date de dépôt: 14.04.2016
(51) Int. Cl.: B65D 85/76, A23C 19/00, B65D 75/26, B65D 75/28, B65B 7/20, B65B 25/10, B65B 3/04, B65B 7/28, B65D 75/68, B29L 31/00, B29K 705/02, B29C 65/18, B29C 65/00

(54) **PROCÉDÉ DE PRODUCTION D'UNE PORTION EMBALLÉE DE PRODUIT ALIMENTAIRE**
VERFAHREN ZUR HERSTELLUNG EINER VERPACKTEN PORTION EINES LEBENSMITTELPRODUKTS
METHOD FOR PRODUCING A PACKAGED PORTION OF A FOOD PRODUCT

(30) Priorité: 17.04.2015 FR 1553452
(43) Date de publication de la demande: 21.02.2018
(73) Titulaire: Fromageries Bel, 92150 Suresnes (FR)
(72) Inventeur: VERNIER, Alexandre, 41100 Naveil (FR)
(74) Mandataire: Lavoix
(86) Numéro de dépôt international: PCT/EP2016/058283
(87) Numéro de publication internationale: WO 2016/166249

(56) Documents cités:
- EP-A1- 1 836 110
- EP-A1- 2 177 437
- EP-A2- 2 008 948
- EP-B1- 1 283 808
- EP-B1- 2 238 037
- CH-A5- 674 347
- US-A- 3 924 803
- US-A1- 2004 011 007

## Description

La présente invention concerne un procédé de production d'une portion emballée scellée de produit alimentaire.

Une telle portion emballée est généralement du type comprenant un godet définissant un espace de réception du produit alimentaire et un couvercle de recouvrement du produit alimentaire et de fermeture du godet, des rabats du godet, thermiquement conducteurs, étant pliés sur une face externe du couvercle opposée à l'espace de réception et scellés à ladite face externe, le produit alimentaire étant contenu dans l'espace de réception et recouvert par le couvercle.

L'invention s'applique plus particulièrement à la production de portions emballées étanches de produits alimentaires dosés à froid, c'est-à-dire à une température inférieure 50°C, tels que, à titre non limitatif, les fromages frais ou obtenus par un procédé de recombinaison (ex : fromages décrits dans WO 2006/030128 et WO 2008/151820) ou par techniques membranaires, conditionnés à l'état liquide visqueux ou pâteux, les cold pack cheese, les dérivés de yaourt ou tout autre produit laitier frais avec des ferments vivants, les cubes de bouillon ou le beurre.

Le plus souvent, les produits alimentaires dosés à froid, lorsqu'ils sont conditionnés sous forme de portions individuelles, sont simplement emballés dans une feuille de matériau flexible repliée autour de la dose de produit. Des exemples de produits alimentaires conditionnés de cette façon sont le beurre et les fromages frais commercialisés par exemple sous la marque Boursin®. Ce type de conditionnement simple présente l'inconvénient de ne pas être étanche, générant un dessèchement rapide du produit et donc une durée de conservation réduite.

Un objectif de l'invention est ainsi d'obtenir un conditionnement étanche d'une portion de produit alimentaire dosé à froid, de manière à éviter le dessèchement du produit et contribuer à une meilleure conservation du produit dans le temps et à une amélioration de la qualité du produit. La durée de conservation du produit sera augmentée et les possibilités d'exportation étendues.

Des procédés de production de portions emballées scellées de produits alimentaires, permettant le conditionnement étanche de produits devant être dosés à froid, sont connus. Ces procédés comprennent généralement les étapes suivantes :
- fourniture d'un godet définissant un espace intérieur de réception du produit alimentaire,
- dosage à froid du produit alimentaire dans l'espace de réception du godet,
- recouvrement du produit alimentaire au moyen d'un couvercle agencé de sorte que des rabats du godet soient rabattus vers l'extérieur du godet après l'étape de recouvrement, et
- scellage à chaud des rabats sur une face interne du couvercle orientée vers l'espace de réception.

Pour l'étape de scellage, on utilise le plus souvent des mâchoires de scellage métalliques que l'on fait monter en température et qui viennent pincer entre elles les rabats et le couvercle en activant un vernis de thermoscellage dont sont enduits les rabats.

Un tel procédé est connu par exemple de EP 1 072 535 et EP 2 284 082. Un inconvénient de ce procédé est qu'il résulte en la formation d'une collerette à la périphérie de la portion, rendant la portion peu esthétique et peu pratique. Un autre inconvénient de ce procédé est qu'il nécessite de grandes quantités d'emballage, ce qui n'est pas écologique.

On connaît par ailleurs des procédés de production de portions emballées scellées de produits alimentaires pouvant être dosés à chaud, c'est-à-dire avec une température typiquement supérieure à 65°C, tels que les fromages fondus, qui permettent d'obtenir des portions emballées scellées ne présentant pas de collerette périphérique. Ces procédés comprennent généralement les étapes suivantes :
- fourniture d'un godet métallique définissant un espace intérieur de réception du produit alimentaire,
- dosage à chaud du produit alimentaire dans l'espace de réception du godet,
- recouvrement du produit alimentaire au moyen d'un couvercle métallique agencé de sorte que des rabats du godet s'étendent à l'extérieur du couvercle après l'étape de recouvrement,
- pliage des rabats sur une face externe du couvercle opposée à l'espace de réception, et
- scellage à chaud des rabats sur la face externe.

Pour l'étape de scellage, on utilise le plus souvent un fer de scellage métallique que l'on fait monter en température et qui vient en appui sur les rabats, les pressant ainsi contre le couvercle et activant un vernis de thermoscellage dont sont enduits les rabats. Par l'exercice de cette pression et de ce chauffage, on scelle les rabats et le couvercle qui sont en contact sous ce fer et l'on tasse la portion, étant précisé que ce tassage donne à la portion sa forme définitive.

Il serait souhaitable de pouvoir utiliser un tel procédé avec un produit alimentaire devant être dosé à froid, de manière à obtenir une portion emballée scellée de produit alimentaire devant être dosé à froid qui ne comprenne pas de collerette périphérique.

Toutefois, le fait que le produit alimentaire soit dosé à chaud dans l'emballage constitue une caractéristique essentielle de ces procédés connus. En effet, la chaleur dégagée par le produit alimentaire après son dosage est utilisée comme un apport calorifique majeur pour porter le vernis de thermoscellage au-delà de sa température de fusion et ainsi permettre son activation. Cet apport calorifique permet notamment de sceller les portions en un temps suffisamment court pour tenir des cadences de production industrielles.

Un problème se pose ainsi pour remplacer l'étape de dosage à chaud par une étape de dosage à froid. En effet, en dosant le produit alimentaire contenu dans la portion à une température inférieure à la température de fusion du vernis de thermoscellage, le produit alimentaire ne peut pas contribuer à chauffer le vernis au-delà de sa température de fusion ; au contraire même, le produit alimentaire absorbe une grande partie des calories apportées par le fer de scellage. De ce fait, en remplaçant l'étape de dosage à chaud du procédé précité par une étape de dosage à froid, la durée de scellage est considérablement allongée, et il devient impossible de tenir une cadence de production industrielle. Un autre inconvénient observé est que le chauffage du produit alimentaire contenu dans l'emballage, induit par le fer de scellage, dégrade les qualités organoleptiques du produit alimentaire.

Une solution au problème précité est proposée dans EP 2 177 437. Elle consiste à chauffer le godet par induction au moment du scellage.

Cette solution est toutefois complexe et coûteuse à mettre en oeuvre. En outre, elle ne résout pas complètement le problème de l'échauffement du produit alimentaire, et du risque de perte des qualités organoleptiques qui en résulte.

Enfin, on connaît de CH 674 347 une portion emballée scellée de fromage fondu dans laquelle le couvercle sur lequel sont rabattus les rabats du godet comprend une couche en matière plastique.

Un objectif de l'invention est ainsi de permettre un scellage simple et peu coûteux d'une portion emballée de produit alimentaire dans laquelle le produit alimentaire doit être dosé à froid, sans former de collerette saillante à l'extérieur de la portion. D'autres objectifs sont d'éviter d'échauffer le produit alimentaire contenu dans la portion au cours du scellage, et de permettre la tenue d'une cadence de production industrielle.

A cet effet, l'invention a pour objet un procédé de production d'une portion emballée de produit alimentaire, comprenant les étapes suivantes :
- fourniture d'un godet définissant un espace intérieur de réception du produit alimentaire,
- dosage à froid, à une température inférieure à 50°C, du produit alimentaire dans l'espace de réception du godet,
- recouvrement du produit alimentaire au moyen d'un couvercle thermiquement isolant agencé de sorte que des rabats du godet, thermiquement conducteurs, s'étendent à l'extérieur du couvercle après l'étape de recouvrement,
- pliage des rabats sur une face externe du couvercle opposée à l'espace de réception, et
- scellage à chaud des rabats sur la face externe.

Le fait que le couvercle soit thermiquement isolant limite grandement la fuite des calories vers le produit alimentaire lors du scellage, ce qui permet d'atteindre le double objectif de réduire la durée de scellage et d'éviter l'échauffement du produit alimentaire.

Selon des modes de réalisation particuliers de l'invention, le procédé présente également l'une ou plusieurs des caractéristiques suivantes, prise(s) isolément ou suivant toute(s) combinaison(s) techniquement possible(s) :
- l'étape de scellage comprend les sous-étapes suivantes :
   ∘ application d'au moins un fer de scellage chaud sur les rabats, les rabats étant interposés entre ledit fer de scellage et le couvercle, et
   ∘ activation d'au moins un matériau thermoadhésif prévu à l'interface entre les rabats et le couvercle au moyen de chaleur apportée au matériau thermoadhésif par le ou chaque fer de scellage ;
- l'étape d'application du ou de chaque fer de scellage comprend les applications successives de deux fers de scellage sur les rabats ;
- les rabats comprennent une face intérieure orientée vers l'espace de réception, une face extérieure orientée à l'opposé de l'espace de réception, et présentent un premier coefficient de transfert thermique surfacique entre leurs faces intérieure et extérieure, le couvercle comprend une face interne orientée vers l'espace de réception et présente un deuxième coefficient de transfert thermique surfacique entre ses faces externe et interne, et le rapport du premier coefficient de transfert thermique surfacique sur le deuxième coefficient de transfert thermique surfacique est supérieur ou égal à 400, en particulier supérieur ou égal à 800 ;
- le premier coefficient de transfert thermique surfacique est supérieur ou égal à 10⁷ W.m⁻².K⁻¹, en particulier supérieur ou égal à 1,3.10⁷ W.m⁻².K⁻¹ ;
- le deuxième coefficient de transfert thermique surfacique est inférieur ou égal à 2,5.10⁴ W.m⁻².K⁻¹, en particulier inférieur ou égal à 1,7.10⁴ W.m⁻².K⁻¹ ;
- les rabats ont une conductivité thermique supérieure ou égale à 200 W.m⁻¹.K⁻¹ ;
- le couvercle a une conductivité thermique inférieure ou égale à 0,5 W.m⁻¹.K⁻¹ ;
- les rabats sont composés majoritairement, et de préférence à plus de 70%, de métal, en particulier d'aluminium ;
- le couvercle est composé majoritairement, et de préférence à plus de 90%, de matière plastique, en particulier de matière plastique expansée ;
- la matière plastique est un polymère, par exemple du polypropylène orienté expansé ;
- le couvercle comprend une couche de matière plastique et une couche de métallisation déposée sur au moins une face de la couche de matière plastique, ladite couche de métallisation étant interposée entre le matériau thermoadhésif et la couche de matière plastique.

« Dans le cadre de la présente invention, on entend par « portion » une quantité de produit alimentaire dans un emballage de conditionnement dont le poids est compris entre 5 et 250g ».

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue en perspective d'une portion emballée selon un premier mode de réalisation de l'invention, en cours de production, lors d'une étape de recouvrement du produit alimentaire contenu dans la portion,
- la Figure 2 est une vue en perspective de la portion emballée de la Figure 1, une fois achevée,
- la Figure 3 est une vue en coupe, prise selon le plan III-III de la Figure 1, d'une partie d'un godet de la portion emballée de la Figure 1,
- la Figure 4 est une vue en coupe, prise selon le plan IV-IV de la Figure 1, d'un couvercle de la portion emballée de la Figure 1,
- les Figures 5 à 9 sont des vues en coupe, prises selon le plan V-V de la Figure 2, de la portion emballée de la Figure 1 au cours d'étapes successives d'un procédé de production de ladite portion emballée,
- la Figure 10 est une vue en perspective d'une portion emballée selon un deuxième mode de réalisation de l'invention, en cours de production, lors d'une étape de recouvrement du produit alimentaire contenu dans la portion,
- la Figure 11 est une vue en perspective de la portion emballée de la Figure 10, une fois achevée,
- la Figure 12 est une vue en coupe, prise selon le plan XII-XII de la Figure 10, d'une partie d'un godet de la portion emballée de la Figure 10,
- la Figure 13 est une vue en coupe, prise selon le plan XIII-XIII de la Figure 10, d'un couvercle de la portion emballée de la Figure 10, et
- les Figures 14 à 18 sont des vues en coupe, prises selon le plan XIV-XIV de la Figure 11, de la portion emballée de la Figure 10 au cours d'étapes successives d'un procédé de production de ladite portion emballée.

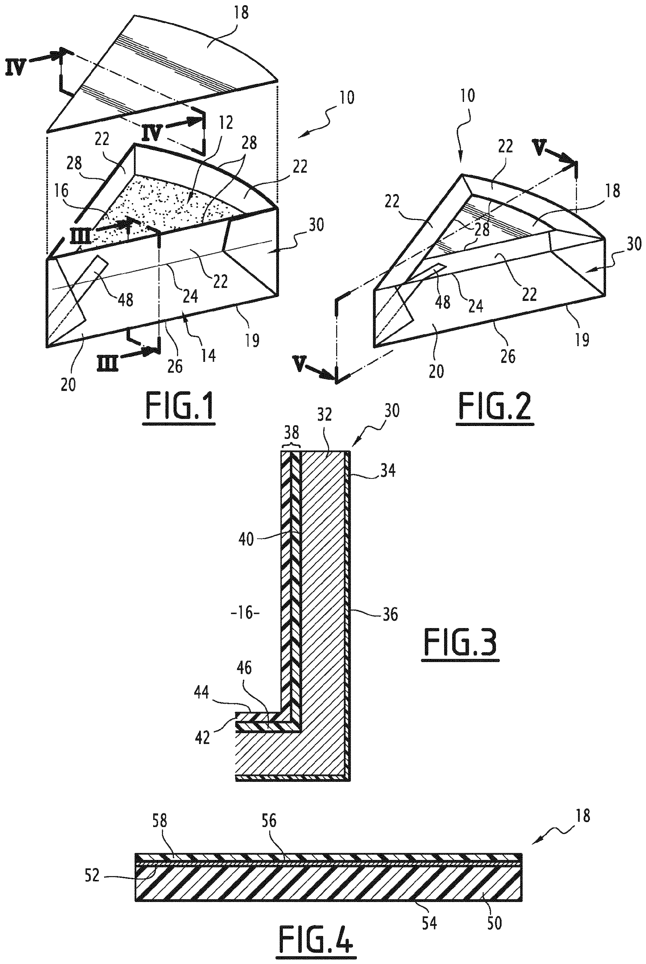

La portion emballée 10, représentée sur les Figures 1 et 2, est une portion emballée de produit alimentaire contenant un produit alimentaire 12. Elle comprend un godet 14 définissant un espace 16 de réception du produit alimentaire 12, et un couvercle 18 de recouvrement du produit alimentaire 12 et de fermeture du godet 14.

Le produit alimentaire 12 est par exemple un produit à base de caillé laitier frais, seul ou en mélange, ou un fromage issu d'un procédé de recombinaison.

Le godet 14 présente un fond 19, une paroi latérale périphérique 20 faisant saillie depuis la périphérie du fond 19, sensiblement perpendiculairement à celui-ci, et des rabats 22 s'étendant depuis un bord supérieur 24 de la paroi latérale 20 opposé au bord inférieur 26 de raccordement de la paroi latérale 20 au fond 19. L'espace de réception 16 est défini entre le fond 19 et la paroi latérale 20.

Le fond 19 a, dans l'exemple représenté, une forme générale de triangle. En variante, le fond 19 a toute autre forme, par exemple une forme discoïdale ou rectangulaire.

Chaque rabat 22 s'étend depuis le bord supérieur 24 de la paroi latérale 20 jusqu'à un bord libre 28. La distance du bord libre 28 au bord supérieur 24 est de préférence inférieure à la distance du bord supérieur 24 au bord inférieur 26.

Dans ce premier mode de réalisation, le godet 14 comprend une unique feuille 30, pliée sur elle-même, formant le fond 19, la paroi latérale 20 et les rabats 22. Un exemple de pliage de cette feuille 30 pour former le godet 14 est par exemple donné dans FR 2 888 571.

La feuille 30 est thermiquement conductrice. En particulier, la feuille 30 a une conductivité thermique supérieure ou égale à 200 W.m⁻¹.K⁻¹. A cet effet, la feuille 30 est composée majoritairement, et de préférence à plus de 70%, de métal, en particulier d'aluminium.

En particulier, comme visible sur la Figure 3, la feuille 30 présente une structure multicouche comprenant : une couche principale 32 en métal, en particulier en aluminium, définissant une face intérieure 40 de la feuille 30, orientée vers l'espace de réception 16, et un revêtement extérieur 34, déposé sur une face de la couche principale 32 opposée à la face intérieure 40 et définissant une face extérieure 36 de la feuille 30, orientée à l'opposé de l'espace de réception 16..

La couche principale 32 constitue plus de 70% en épaisseur de la feuille 30. Elle a de préférence une épaisseur comprise entre 10 et 12 µm.

Le revêtement extérieur 34 comprend typiquement une couche de laque non thermoadhésive, par exemple une couche de laque nitrocellulosique. Le revêtement extérieur 34 a une épaisseur comprise entre 2 et 4 µm.

L'épaisseur de la feuille 30, prise entre ses faces extérieure 36 et intérieure 40, est donc inférieure à 20 µm, et en particulier inférieure à 15 µm. La feuille 30 présente ainsi un premier coefficient de transfert thermique surfacique, entre ses faces intérieure 40 et extérieure 36, supérieur ou égal à 10⁷ W.m⁻².K⁻¹, en particulier supérieur ou égal à 1,3.10⁷ W.m⁻².K⁻¹.

On notera que, puisque la feuille 30 constitue les rabats 22, les faces intérieure 40 et extérieure 36 constituent également des faces intérieure et extérieure desdits rabats 22.

La face intérieure 40 est recouverte d'un revêtement intérieur 38 distinct de la feuille 30. Ce revêtement intérieur 38 comprend une couche thermoadhésive 42, définissant une face intérieure 44 du revêtement 38 orientée vers l'espace de réception 16.

La couche thermoadhésive 42 est constituée d'un matériau thermoadhésif adapté pour former une liaison avec un matériau compatible lorsqu'il est porté à une température supérieure à une température seuil. Ledit matériau thermoadhésif est de préférence un matériau thermoadhésif à basse température, c'est-à-dire que ladite température seuil est inférieure à 75°C. La température seuil reste toutefois supérieure à 58°C, de manière à éviter toute interaction entre la couche thermoadhésive 42 et le produit alimentaire 12 à la température normale de conservation du produit alimentaire 12. La température seuil est typiquement une température de fusion du matériau thermoadhésif.

La couche thermoadhésive 42 comprend par exemple une couche vinylique.

De préférence, comme représenté, le revêtement intérieur 38, comprend, en plus de la couche thermoadhésive 42, une couche protectrice 46 interposée entre la couche thermoadhésive 42 et la feuille 30. Cette couche protectrice 46 est adaptée pour protéger la feuille 30 contre la corrosion.

La couche protectrice 46 comprend par exemple une couche vinylique.

En variante (non représentée), le revêtement intérieur 38 est constitué par la seule couche thermoadhésive 42, celle-ci étant alors de préférence adaptée pour protéger la feuille 30 contre la corrosion.

Des exemples d'autres matériaux pouvant entrer dans la composition de la couche thermoadhésive 42 et/ou de la couche protectrice 46 sont les matériaux de type laque, comprenant par exemple des polymères de type PVC plastifiés, ou des copolymères de PVC avec de l'éthylène, du laurate de vinyle ou de l'acétate de vinyle, ou des polymères à base d'oléfines comme l'éthylène, le butadiène, et leur copolymères, ou des polymères à base d'esters comme le PLA, l'acétate de vinyle, les esters vinyliques d'acides gras, les alcools gras d'acide acrylique et les alcools gras d'acide méthacrylique, ou des polymères à base d'acide téréphtalique et d'éthylène glycol modifié ou non, et les matériaux obtenus par extrusion d'un polymère, typiquement un polyoléfine à base d'éthylène, de butadiène et leur copolymères, et/ou un polymère vinylique à base de chlorure de vinyle, et/ou d'esters vinyliques d'acides gras, et/ou d'alcools gras d'acide acrylique, et/ou d'alcools gras d'acide méthacrylique, ladite extrusion étant réalisée typiquement par la technologie rideau du matériau brut à l'état liquide visqueux, par la technologie rideau du matériau sous forme d'une suspension ou émulsion aqueuse, par enduction d'une suspension ou par émulsion de polymère dans l'eau, par exemple par pulvérisation ou essuyage par un pinceau ou un ruban.

L'épaisseur totale du revêtement intérieur 38 est de préférence comprise entre 4 et 6 µm.

De retour aux Figures 1 et 2, le godet 14 comprend également un élément 48 de guidage de déchirures dans la feuille 20. Cet élément de guidage 48 est typiquement constitué par au moins une bande de guidage rapportée sur la face interne 40 de la feuille 30 et scellée à cette dernière. Un exemple de disposition de ladite bande de guidage sur la face interne 40 est donné dans FR 2 888 571.

Le couvercle 18 est opposé au fond 19 relativement à l'espace de réception 16, c'est-à-dire que l'espace de réception 16 est interposé entre le couvercle 18 et le fond 19.

Le couvercle 18 est sensiblement plat.

Le couvercle 18 est thermiquement isolant. En particulier, le couvercle 18 a une conductivité thermique inférieure ou égale à 0,5 W.m⁻¹.K⁻¹. A cet effet, le couvercle 18 est composé majoritairement, et de préférence à plus de 80% voire plus de 90%, de matière plastique, en particulier de matière plastique expansée. Ladite matière plastique est avantageusement un polymère, par exemple du polypropylène orienté (OPP).

En particulier, comme visible sur la Figure 4, le couvercle 18 présente une structure multicouche comprenant : une couche principale 50 en matière plastique, en particulier en matière plastique expansée, par exemple en OPP expansé, et un revêtement externe 52.

La couche principale 50 constitue plus de 90%, de préférence plus de 99%, de l'épaisseur du couvercle 18. Elle a en particulier une épaisseur comprise entre 20 et 60 µm, de préférence comprise entre 30 et 40µm.

La couche principale 50 définit une face interne 54 du couvercle 18, orientée vers l'espace de réception 16.

Le revêtement externe 52 est déposé sur une face de la couche principale 50 opposée à la face interne 54. Il définit une face externe 56 du couvercle 18 orientée à l'opposé de l'espace de réception 16.

Le revêtement externe 52 comprend une couche de métallisation et est avantageusement constitué par ladite couche de métallisation. Cette couche de métallisation permet de former une barrière à la lumière et aux gaz qui protège le produit alimentaire 12. Elle est de préférence composée majoritairement d'aluminium.

Le revêtement externe 52 a avantageusement une épaisseur de quelques angströms. A cet effet, la couche de métallisation est déposée par évaporation sous vide du métal constituant ladite couche. Ainsi, l'effet de la couche de métallisation sur la conductivité thermique du couvercle 18 est négligeable.

L'épaisseur du couvercle 18, prise entre ses faces interne 54 et externe 56, est donc supérieure à 20 µm, et en particulier supérieure à 30 µm. Le couvercle 18 présente ainsi un deuxième coefficient de transfert thermique surfacique, entre ses faces interne 54 et externe 56, inférieur ou égal à 2,5.10⁴ W.m⁻².K⁻¹, en particulier inférieur ou égal à 1,7.10⁴ W.m⁻².K⁻¹.

Le rapport du premier coefficient de transfert thermique sur le deuxième coefficient de transfert thermique est ainsi supérieur ou égal à 400, et est en particulier supérieur ou égal à 800. Cette forte différence entre les premier et deuxième coefficients de transfert thermique permet d'assurer que, en cas d'application d'un élément chaud sur la face extérieure 36 des rabats 22, les calories seront rapidement transférée de l'élément chaud à l'interface entre les rabats 22 et le couvercle 18, mais que ces calories fuiront beaucoup plus lentement au travers du couvercle 18 jusqu'au produit alimentaire 12.

La face externe 56 est enduite d'un revêtement thermoadhésif 58, distinct du couvercle 18.

Ce revêtement thermoadhésif 58 est constitué d'un matériau thermoadhésif adapté pour former une liaison avec un matériau compatible lorsqu'il est porté à une température supérieure à une température seuil. Ledit matériau thermoadhésif est de préférence un matériau thermoadhésif à basse température, c'est-à-dire que ladite température seuil est inférieure à 75°C. La température seuil reste toutefois supérieure à 58°C, de manière à éviter toute interaction entre le revêtement thermoadhésif 58 et le produit alimentaire 12 à la température normale de conservation du produit alimentaire 12. La température seuil est typiquement une température de fusion du matériau thermoadhésif.

Les matériaux adhésifs du revêtement thermoadhésif 58 et de la couche thermoadhésive 42 sont des matériaux compatibles.

De retour aux Figures 1 et 2, les rabats 22 sont pliés sur la face externe 56 du couvercle 18 et sont scellés de manière étanche à ladite face externe 56 par l'intermédiaire du revêtement thermoadhésif 58 et de la couche thermoadhésive 42. Les rabats 22 sont en particulier pliés vers l'intérieur du godet 14 relativement à la paroi latérale 20.

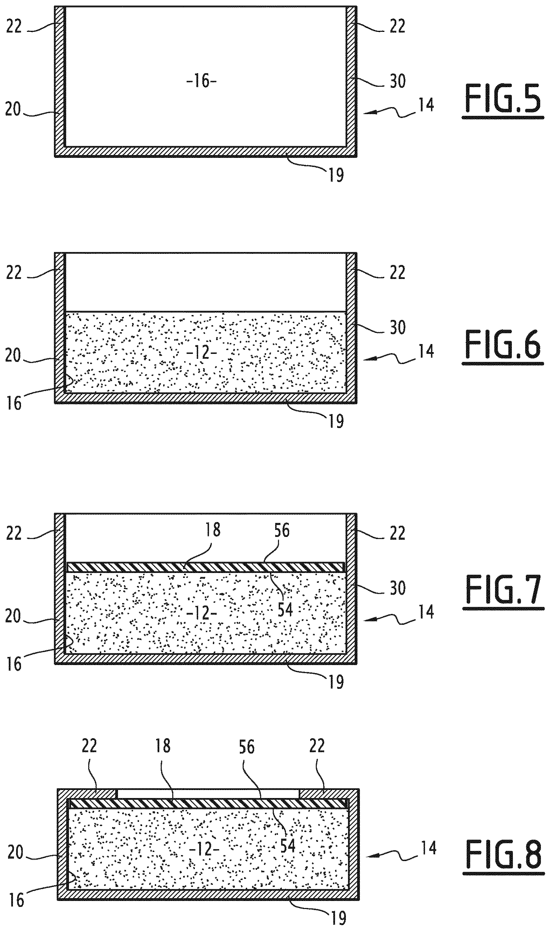

Un procédé de production de la portion emballée 10 va maintenant être décrit, en référence aux Figures 5 à 9.

Tout d'abord, comme visible sur la Figure 5, la feuille 30 est pliée de manière à former le godet 14. A cet effet, la feuille 30 est par exemple pliée comme décrit dans FR 2 888 571.

Ensuite, comme représenté à la Figure 6, le produit alimentaire 12 est dosé à froid, c'est-à-dire à une température inférieure à 50°C, dans l'espace de réception 16 du godet 14. Le produit alimentaire 12 est en particulier dosé à une température comprise entre 0 et 30°C, de préférence comprise entre 0 et 20°C et plus particulièrement entre 5 et 15°C.

Puis le produit alimentaire 12 est recouvert au moyen du couvercle 18. A cet effet, le couvercle 18 est introduit entre les rabats 22, sa face interne 54 étant orientée vers le produit alimentaire 12, et il est descendu entre les rabats 22 jusqu'à être en contact avec le produit alimentaire 12, comme représenté à la Figure 7. Ainsi, à la fin de cette étape de recouvrement, les rabats 22 s'étendent à l'extérieur du couvercle 18, c'est-à-dire que le couvercle 18 est interposé entre les rabats 22 et le produit alimentaire 12.

Le recouvrement du produit alimentaire 12 par le couvercle 18 est suivi d'une étape, représentée sur la Figure 8, de pliage des rabats 22 vers l'intérieur du godet 14, sur la face externe 56 du couvercle 18.

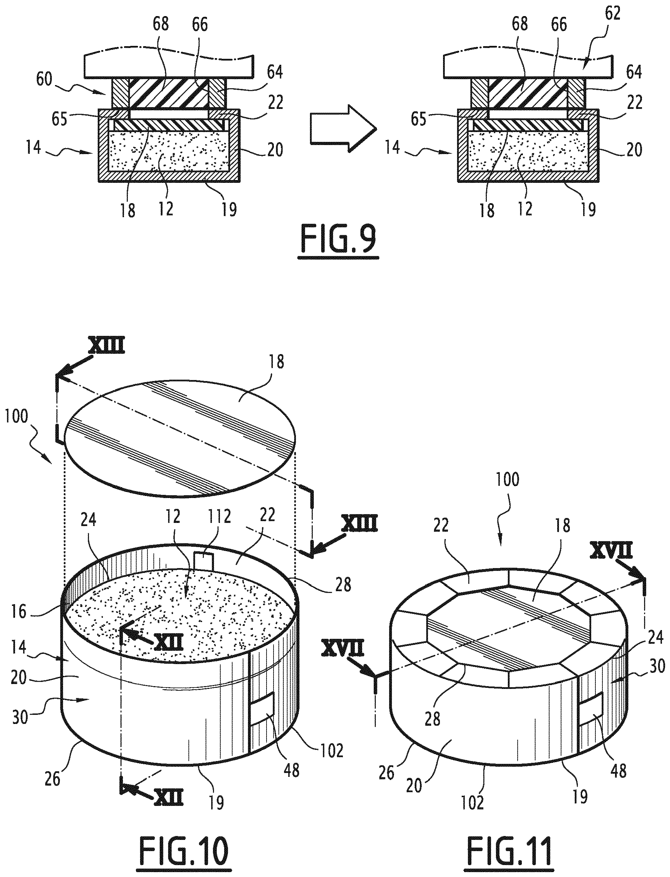

Puis, comme représenté sur la Figure 9, les rabats 22 sont scellés à chaud, sous pression, sur la face externe 56 du couvercle 18.

Ce scellage des rabats 22 sur le couvercle 18 comprend de préférence, comme représenté, une étape de pré-scellage et une étape de scellage définitif.

L'étape de pré-scellage comprend l'application d'un premier fer de scellage 60 chaud sur les rabats 22, les rabats 22 étant interposés entre ledit premier fer 60 et le couvercle 18, le premier fer de scellage 60 pressant les rabats 22 contre le couvercle 18. L'étape de scellage définitif comprend l'application d'un deuxième fer de scellage 62 chaud sur les rabats 22, les rabats 22 étant interposés entre ledit deuxième fer 62 et le couvercle 18, le deuxième fer de scellage 62 pressant les rabats 22 contre le couvercle 18. Lesdites applications sont des applications successives se succèdent l'une à l'autre avec de préférence un intervalle de temps inférieur à 2 s.

Chacun des fers de scellage 60, 62 comprend un organe métallique 64 chaud, c'est-à-dire à une température typiquement supérieure à 120°C, définissant une face de contact 65 avec les rabats, ladite face de contact 65 ayant sensiblement la forme du contour du couvercle 18. De préférence, l'organe métallique 64 est toutefois à une température inférieure à 140°C, de manière à éviter que son application contre les rabats 22 n'endommage le plastique du couvercle 18.

De manière à éviter que l'organe métallique 64 ne soit en contact avec le couvercle 18, ce qui pourrait endommager le couvercle 18, un évidement 66 est formé au centre de l'organe métallique 64, la face de contact 65 définissant la périphérie dudit évidement 66.

Un insert isolant 68 est logé dans ledit évidement 66 et affleure la face de contact 65. Cela évite que la pression exercée par les fers de scellage 60, 62 sur les rabats 22 ne provoque une déformation de la portion scellée 10 à sa périphérie.

Cet insert isolant 68 est composé d'un matériau thermoplastique ou thermodur à haut point de fusion, par exemple de bakélite, d'une toile de coton bakelisée, ou de polyétheréthercétone.

Lors de l'application de chaque fer de scellage 60, 62 contre les rabats 22, de la chaleur est transférée du fer de scellage 60, 62 au revêtement thermoadhésif 58 et à la couche thermoadhésive 42 au travers des rabats 22. Ce transfert de chaleur est rapide, puisque les rabats 22 sont thermiquement conducteurs. Le couvercle 18 étant isolant, il empêche la chaleur transférée au revêtement thermoadhésif 58 et à la couche thermoadhésive 42 de fuir vers le produit alimentaire 12. Cette chaleur s'accumule à l'interface entre les rabats 22 et le couvercle 18, ce qui provoque une rapide élévation de la température du revêtement thermoadhésif 58 et de la couche thermoadhésive 42 jusqu'à une température supérieure à la température seuil des matériaux thermoadhésifs les constituants. Lesdits matériaux thermoadhésifs sont ainsi activés par cette chaleur et forment une liaison entre les rabats 22 et le couvercle 18. C'est cette liaison qui assure le scellage des rabats 22 au couvercle 18.

On notera que le fait de recourir à l'application successive des deux fers de scellage 60, 62, plutôt qu'à l'application d'un seul fer de scellage, permet de réduire sensiblement la durée d'application de chaque fer de scellage 60, 62 pour obtenir un scellage étanche de la portion 10. Il est ainsi possible d'élever la cadence de production de la portion emballée 10 jusqu'à atteindre une cadence identique à la cadence de production de portions de fromage fondu dosé à chaud.

La description de la portion emballée 10 donnée ci-dessus est en grande partie applicable à la portion emballée 100 représenté sur les Figures 10 est 11. Par souci de simplification, des signes de référence identiques ont donc été utilisés pour désigner les éléments communs aux portions emballées 10 et 100, et les caractéristiques communes ont été omises de la description ci-dessous.

La portion emballée 100 se distingue principalement de la portion emballée 10 en ce que la feuille 30 ne constitue pas le fond 19 du godet. A la différence de la portion emballée 10, le fond 19 comprend en effet ici une base 102 scellée à la feuille 30. La feuille 30 constitue toutefois toujours la paroi latérale 20 et les rabats 22.

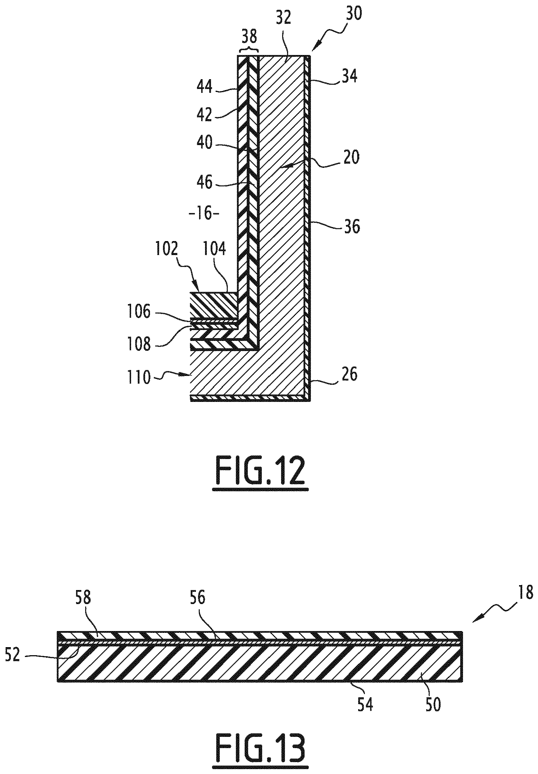

En référence à la Figure 12, la base 102 est sensiblement plane. Elle présente une face interne 104, orientée vers l'espace de réception 16, et une face externe 106 orientée à l'opposé de l'espace de réception 16.

La face externe 106 est enduite d'un revêtement thermoadhésif 108, distinct de la base 102.

Ce revêtement thermoadhésif 108 est constitué d'un matériau thermoadhésif adapté pour former une liaison avec un matériau compatible lorsqu'il est porté à une température supérieure à une température seuil. Ledit matériau thermoadhésif est de préférence un matériau thermoadhésif à basse température, c'est-à-dire que ladite température seuil est inférieure à 75°C. La température seuil reste toutefois supérieure à 58°C, de manière à éviter toute interaction entre le revêtement thermoadhésif 108 et le produit alimentaire 12 à la température normale de conservation du produit alimentaire 12. La température seuil est typiquement une température de fusion du matériau thermoadhésif.

Les matériaux adhésifs du revêtement thermoadhésif 108 et de la couche thermoadhésive 42 sont des matériaux compatibles.

Dans l'exemple représenté, la base 102 est identique au couvercle 18. Cela permet de faciliter la production de la portion emballée 100.

La feuille 30 comprend une région de bordure 110 reliée à la paroi latérale 20 par le bord inférieur 26 de cette dernière. Cette région de bordure 110 est pliée et scellée de manière étanche sur la face externe 106 de la base 102.

Cette réalisation du godet 14 en deux parties (la feuille 30 et la base 102) permet de conférer à la portion emballée 100 une forme originale. En particulier, cette réalisation du godet 14 en deux parties permet de conférer facilement à la portion emballée 100 la forme cylindrique de révolution visible sur les Figures 10, 11, forme qu'il est plus difficile de réaliser avec un godet 14 en une seule partie comme c'est le cas pour la portion emballée 10. Cette réalisation du godet 14 permet en effet d'obtenir une portion cylindrique sans aucun pli sur la paroi latérale 20 et d'avoir la bande de guidage de déchirures dans la feuille 30 disposée le long des bords inférieur 26 et supérieur 24 de la paroi latérale 20.

Une autre différence que présente la portion emballée 100 par rapport à la portion emballée 10 est que la portion emballée 100 comprend deux languettes de préhension 112 logées dans l'espace de réception 16. Une première desdites languettes 112 est à cheval sur la paroi latérale 20 et sur le couvercle 18 en étant scellée au couvercle 18, et la deuxième languette 112 est à cheval sur la paroi latérale 20 et sur la base 102 en étant scellée à la base 102. Ces languettes 112 permettent de faciliter le retrait du couvercle 18 et de la base 102 par un consommateur après l'arrachage de la paroi latérale 20.

Le procédé de production de la portion emballée 100 est par ailleurs sensiblement identique au procédé de production de la portion emballée 10. La seule différence entre ces procédés consiste en l'étape de fourniture du godet 14, qui comprend ici les étapes suivantes :
- pliage de la feuille 30 de manière à former un tube, par exemple en enroulant la feuille 30 autour d'un mandrin,
- introduction de la base 102 à l'intérieur du tube, la base 102 étant orientée perpendiculairement à l'axe du tube, jusqu'à affleurer l'élément de guidage de déchirures 48,
- pliage de la région de bordure 110 sur la face externe 106 de la base 102, et
- scellage à chaud de la région de bordure 110 sur la face externe 106.

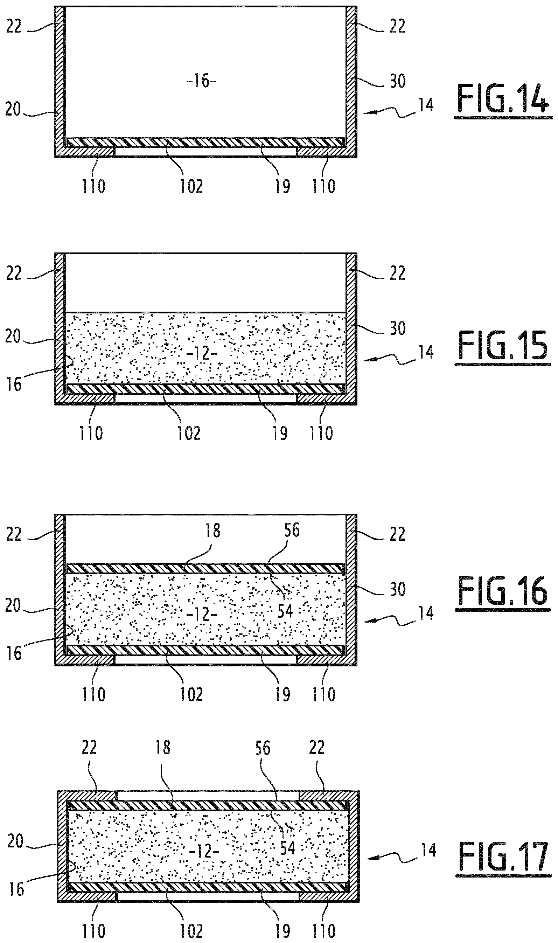

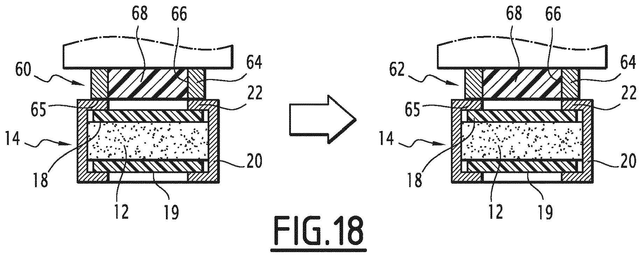

Pour la description du reste du procédé de production de la portion emballée 100, le lecteur est invité à la description du procédé de production de la portion emballée 10, les Figures 14, 15, 16, 17 et 18 correspondant respectivement aux Figures 5, 6, 7, 8 et 9.

Grâce au procédé décrit ci-dessus, il est ainsi possible de produire aisément des portions emballées scellées étanches de produits alimentaires devant être dosés à froid, sans que la portion emballée obtenue ne présente de collerette périphérique.

Ce procédé peut en outre facilement être mis en oeuvre, car il ne demande que très peu d'adaptation des machines de production existantes déjà utilisées pour la production des portions emballées scellées de produits alimentaires dosés à chaud : la plupart des outils existants peuvent en effet être réutilisés, les principales adaptations devant être réalisées consistant en l'ajout de barres anti-statisme pour limiter le risque de statisme lié à l'emploi de matière plastique, en la modification des bobines d'approvisionnement en matériau constituant le couvercle, et en l'ajout d'un poste de scellage supplémentaire.

## Revendications

1. Procédé de production d'une portion emballée (10, 100) de produit alimentaire, comprenant les étapes suivantes :
- fourniture d'un godet (14) définissant un espace intérieur (16) de réception du produit alimentaire (12),
- dosage à froid, à une température inférieure à 50°C, du produit alimentaire (12) dans l'espace de réception (16) du godet (14),
- recouvrement du produit alimentaire (12) au moyen d'un couvercle (18) agencé de sorte que des rabats (22) du godet (14), thermiquement conducteurs, s'étendent à l'extérieur du couvercle (18) après l'étape de recouvrement,
- pliage des rabats (22) sur une face externe (56) du couvercle (18) opposée à l'espace de réception (16), et
- scellage à chaud des rabats (22) sur la face externe (56),
**caractérisé en ce que** le couvercle (18) est thermiquement isolant.

2. Procédé de production selon la revendication 1, dans lequel l'étape de scellage comprend les sous-étapes suivantes :
- application d'au moins un fer de scellage (60, 62) chaud sur les rabats (22), les rabats (22) étant interposés entre ledit fer de scellage (60, 62) et le couvercle (18), et
- activation d'au moins un matériau thermoadhésif (46, 58) prévu à l'interface entre les rabats (22) et le couvercle (18) au moyen de chaleur apportée au matériau thermoadhésif (46, 58) par le ou chaque fer de scellage (60, 62).

3. Procédé de production selon la revendication 2, dans lequel l'étape d'application du ou de chaque fer de scellage (60, 62) comprend les applications successives de deux fers de scellage (60, 62) sur les rabats (22).

4. Procédé de production selon l'une quelconque des revendications précédentes, dans lequel les rabats (22) comprennent une face intérieure (40) orientée vers l'espace de réception (16), une face extérieure (36) orientée à l'opposé de l'espace de réception (16), et présentent un premier coefficient de transfert thermique surfacique entre leurs faces intérieure et extérieure (36, 40), le couvercle (18) comprend une face interne (54) orientée vers l'espace de réception (16) et présente un deuxième coefficient de transfert thermique surfacique entre ses faces externe et interne (54, 56), et le rapport du premier coefficient de transfert thermique surfacique sur le deuxième coefficient de transfert thermique surfacique est supérieur ou égal à 400, en particulier supérieur ou égal à 800.

5. Procédé de production selon la revendication 4 précédentes, dans lequel le premier coefficient de transfert thermique surfacique est supérieur ou égal à 10⁷ W.m⁻².K⁻¹, en particulier supérieur ou égal à 1,3.10⁷ W.m⁻².K⁻¹.

6. Procédé de production selon la revendication 4 ou 5, dans lequel le deuxième coefficient de transfert thermique surfacique est inférieur ou égal à 2,5.10⁴ W.m⁻².K⁻¹, en particulier inférieur ou égal à 1,7.10⁴ W.m⁻².K⁻¹.

7. Procédé de production selon l'une quelconque des revendications précédentes, dans lequel les rabats (22) ont une conductivité thermique supérieure ou égale à 200 W.m⁻¹.K⁻¹.

8. Procédé de production selon l'une quelconque des revendications précédentes, dans lequel le couvercle (18) a une conductivité thermique inférieure ou égale à 0,5 W.m⁻¹.K⁻¹.

9. Procédé de production selon l'une quelconque des revendications précédentes, dans lequel les rabats (22) sont composés majoritairement, et de préférence à plus de 70%, de métal, en particulier d'aluminium.

10. Procédé de production selon l'une quelconque des revendications précédentes, dans lequel le couvercle (18) est composé majoritairement, et de préférence à plus de 90%, de matière plastique, en particulier de matière plastique expansée.

11. Procédé de production selon la revendication 8, dans lequel la matière plastique est un polymère, par exemple du polypropylène orienté expansé.

12. Procédé de production selon la revendication 8 ou 9 prise en combinaison avec la revendication 2 ou 3, dans lequel le couvercle (18) comprend une couche de matière plastique (50) et une couche de métallisation (52) déposée sur au moins une face de la couche de matière plastique (50), ladite couche de métallisation (52) étant interposée entre le matériau thermoadhésif (58) et la couche de matière plastique (50).

## Patentansprüche

1. Verfahren zum Herstellen eines eingepackten Abschnitts (10, 100) eines Nahrungsmittelprodukts, aufweisend die folgenden Schritte:
- Bereitstellen eines Bechers (14), der einen Innenraum (16) zum Aufnehmen des Nahrungsmittelprodukts (12) definiert,
- Kaltdosieren, bei einer Temperatur von weniger als 50°C, des Nahrungsmittelprodukts (12) in den Aufnahmeraum (16) des Bechers (14),
- Bedecken des Nahrungsmittelprodukts (12) mittels eines Deckels (18), der derart angeordnet ist, dass Laschen (22) des Bechers (14), die wärmeleitend sind, sich nach dem Schritt des Bedeckens am Äußeren des Deckels (18) erstrecken,
- Umfalten der Laschen (22) auf eine Außenfläche (56) des Deckels (18), die dem Aufnahmeraum (16) entgegengesetzt ist, und
- Heißversiegeln der Laschen (22) an der Außenfläche (56),
**dadurch gekennzeichnet, dass** der Deckel (18) thermisch isolierend ist.

2. Verfahren zum Herstellen gemäß Anspruch 1, wobei der Schritt des Versiegelns die folgenden Teilschritte aufweist:
- Aufbringen mindestens eines heißen Versiegelungseisens (60, 62) auf die Laschen (22), wobei die Laschen (22) zwischen dem Versiegelungseisen (60, 62) und dem Deckel (18) angeordnet sind, und
- Aktivieren mindestens eines wärmeklebenden Materials (46, 58), das an der Verbindungsstelle zwischen den Laschen (22) und dem Deckel (18) vorgesehen ist, mittels Wärme, die durch das oder jedes Versiegelungseisen (60, 62) auf das wärmeklebende Material (46, 58) aufgebracht wird.

3. Verfahren zum Herstellen gemäß Anspruch 2, wobei der Schritt des Aufbringens des oder jedes Versiegelungseisens (60, 62) aufeinanderfolgende Aufbringungen von zwei Versiegelungseisen (60, 62) auf die Laschen (22) aufweist.

4. Verfahren zum Herstellen gemäß irgendeinem der vorhergehenden Ansprüche, wobei die Laschen (22) aufweisen eine Innenfläche (40), die in Richtung zu dem Aufnahmeraum (16) ausgerichtet ist, eine Außenfläche (36), die entgegengesetzt zu dem Aufnahmeraum (16) ausgerichtet ist, und aufweisend einen ersten flächenbezogenen Wärmeübertragungskoeffizienten zwischen ihrer Innenfläche und ihrer Außenfläche (36, 40), wobei der Deckel (18) eine Innenfläche (54) aufweist, die in Richtung zu dem Aufnahmeraum (16) ausgerichtet ist, und einen zweiten flächenbezogenen Wärmeübertragungskoeffizienten zwischen seiner Innen- und Außenfläche (54, 56) aufweist, und wobei das Verhältnis des ersten flächenbezogenen Wärmeübertragungskoeffizienten zu dem zweiten flächenbezogenen Wärmeübertragungskoeffizienten größer oder gleich 400, insbesondere größer oder gleich 800 ist.

5. Verfahren zum Herstellen gemäß dem vorhergehenden Anspruch 4, wobei der erste flächenbezogene Wärmeübertragungskoeffizient größer oder gleich 10⁷ W.m⁻².K⁻¹, insbesondere größer oder gleich 1,3.10⁷ W.^{m-2}.K⁻¹ ist.

6. Verfahren zum Herstellen gemäß Anspruch 4 oder 5, wobei der zweite flächenbezogene Wärmeübertragungskoeffizient kleiner oder gleich 2,5.10⁴ W.m.⁻².K⁻¹, insbesondere kleiner oder gleich 1,7.10⁴ W.m⁻².K⁻¹ ist.

7. Verfahren zum Herstellen gemäß irgendeinem der vorhergehenden Ansprüche, wobei die Laschen (22) eine Wärmeleitfähigkeit haben, die größer oder gleich 200 W.m⁻¹.K⁻¹ ist.

8. Verfahren zum Herstellen gemäß irgendeinem der vorhergehenden Ansprüche, wobei der Deckel (18) eine Wärmeleitfähigkeit hat, die kleiner oder gleich 0,5 W.m⁻¹.K⁻¹ ist.

9. Verfahren zum Herstellen gemäß irgendeinem der vorhergehenden Ansprüche, wobei die Laschen (22) überwiegend und vorzugsweise zu mehr als 70% aus Metall, insbesondere aus Aluminium zusammengesetzt sind.

10. Verfahren zum Herstellen gemäß irgendeinem der vorhergehenden Ansprüche, wobei der Deckel (18) überwiegend und vorzugsweise zu mehr als 90% aus Kunststoff, insbesondere aus expandiertem Kunststoff zusammengesetzt ist.

11. Verfahren zum Herstellen gemäß Anspruch 8, wobei der Kunststoff ein Polymer, zum Beispiel expandiertes orientiertes Polypropylen ist.

12. Verfahren zum Herstellen gemäß Anspruch 8 oder 9 in Kombination mit Anspruch 2 oder 3, wobei der Deckel (18) eine Kunststoffschicht (50) und eine Metallisierungsschicht (52) aufweist, die auf mindestens eine Seite der Kunststoffschicht (50) aufgebracht wird, wobei die Metallisierungsschicht (52) zwischen dem wärmeklebenden Material (58) und der Kunststoffschicht (50) angeordnet wird.

## Claims

1. A method for producing a packaged food product portion (10, 100), comprising the following steps:
- providing a cup (14) defining an inner area (16) for receiving the food product (12),
- cold pouring, at a temperature below 50°C, the food product (12) into the receiving area (16) of the cup (14),
- covering the food product (12) using a lid (18) arranged such that flaps (22) of the cup (14), which are thermally conducting, extend toward the outside of the lid (18) after the covering step,
- folding the flaps (22) on an outer face (56) of the lid (18) opposite the receiving area (16), and
- heat-sealing the flaps (22) on the outer face (56),
**characterized in that** the lid (18) is thermally insulating.

2. The production method according to claim 1, wherein the sealing step comprises the following sub-steps:
- applying at least one hot sealing iron (60, 62) on the flaps (22), the flaps (22) being inserted between said sealing iron (60, 62) and the lid (18), and
- activating at least one thermo-adhesive material (46, 58) provided at the interface between the flaps (22) and the lid (18) using heat provided to the thermo-adhesive material (46, 58) by the or each sealing iron (60, 62).

3. The production method according to claim 2, wherein the step for applying the or each sealing iron (60, 62) comprises the successive applications of two sealing irons (60, 62) on the flaps (22).

4. The production method according to any one of the preceding claims, wherein the flaps (22) comprise an inner face (40) oriented toward the receiving area (16), an outer face (36) oriented away from the receiving area (16), and have a first surface heat transfer coefficient between their inner and outer faces (36, 40), the lid (18) comprises an inner face (54) oriented toward the receiving area (16) and has a second surface heat transfer coefficient between its outer and inner faces (54, 56), and the ratio of the first surface heat transfer coefficient to the second surface heat transfer coefficient is greater than or equal to 400, in particular greater than or equal to 800.

5. The production method according to the preceding claim 4, wherein the first surface heat transfer coefficient is greater than or equal to 10⁷ W.m⁻².K⁻¹, in particular greater than or equal to 1.3.10⁷W.m⁻².K⁻¹.

6. The production method according to claim 4 or 5, wherein the second surface heat transfer coefficient is less than or equal to 2.5.10⁴W.m⁻².K⁻¹, in particular less than or equal to 1.7.10⁴W.m⁻².K⁻¹.

7. The production method according to any one of the preceding claims, wherein the flaps (22) have a thermal conductivity greater than or equal to 200 W.m⁻¹.K⁻¹.

8. The production method according to any one of the preceding claims, wherein the lid (18) has a thermal conductivity less than or equal to 0.5 W.m⁻¹.K⁻¹.

9. The production method according to any one of the preceding claims, wherein the flaps (22) are made up primarily, and preferably more than 70%, of metal, in particular aluminum.

10. The production method according to any one of the preceding claims, wherein the lid (18) is made up primarily, and preferably more than 90%, of plastic, in particular expanded plastic.

11. The production method according to claim 8, wherein the plastic is a polymer, for example expanded oriented polypropylene.

12. The production method according to claim 8 or 9 combined with claim 2 or 3, wherein the lid (18) comprises a layer of plastic material (50) and a metallization layer (52) deposited on at least one face of the plastic layer (50), said metallization layer (52) being inserted between the thermo-adhesive material (58) and the plastic layer (50).
